# EUROPEAN PATENT APPLICATION

(11) **EP 2 116 500 A1**
(43) Date of publication of application: **11.11.2009**
(21) Application number: 08155943.7
(22) Date of filing: 09.05.2008
(51) Int. Cl.: B66B 5/00

(54) **Elevator communication system**

(71) Applicant: Inventio AG, 6052 Hergiswil (CH)
(72) Inventor: Roussel, Frank Olivier, 6600 Muralto (CH); Barmet, Lukas, 6006 Luzern (CH)
(74) Representative: Blöchle, Hans

(57) **Abstract**

An elevator communication system comprises a first voice communication device (12, 14, 16) provided at a car (10) of an elevator system; a second voice communication device (24; 32, 42) provided at a control room (20) of the elevator system and/or a rescue service (30, 40); and a voice communication means (50-58) for providing digital voice communication between the first and second voice communication devices (12, 14, 16; 24; 32, 42). The voice communication means (50-58) comprises a time division multiplexing bus (50) allowing both the digital voice communication and a data communication of a safety circuit of the elevator system so that the same communication media on the traveling cable of the elevator system can be used also for the digital safety circuit of the elevator system.

## Description

The present invention relates to an elevator communication system using digital voice communication.

Elevator systems usually have a data communication system and a voice communication system. The data communication system is part of a safety circuit monitoring the safety state of the elevator system and operating safety devices such as the motor and the brake of the elevator. In case of an emergency there is a need for a voice communication between the car of the elevator system and a control room and/or a rescue service.

In conventional elevators, a general public line is used for real-time transmission of image information and audio information, and a separate network is used for digital data transmission. To enable reliable communication with an enhanced security function, EP 1 748 015 A1 suggests to use a general public line being composed of a plurality of networks including a low-communication-cost public network, a high-speed digital network, and the like. Also, EP 1 783 084 A1 discloses an elevator communication system comprising a data line in the form of a telephone line for transmitting both data of control units and voice information of telephones.

Further, JP 2007-124154 A and US 6,615,175 B1 each show an information and control system capable of carrying out data communication via a digital line. However, none of these documents discloses transmission of data of an elevator safety circuit.

It is an object of the present invention to provide an elevator communication system having a simplified construction, especially a reduced number of wires.

This object is achieved by providing an elevator communication system comprising the features of appending claim 1. Further developments and advantageous embodiments are defined in the dependent claims.

The elevator communication system of the present invention comprises a first voice communication device provided at a car of an elevator system, a second voice communication device provided at a control room of the elevator system and/or a rescue service, and a voice communication means for providing digital voice communication between the first and second voice communication devices. Further, the voice communication means comprises a time division multiplexing bus allowing both the digital voice communication and a data communication of a safety circuit of the elevator system.

According to the present invention, there is an elevator communication system having a simplified structure because the voice communication means is capable to allow both a digital voice communication and a data communication of a safety circuit. In other words, the same communication means is used for voice communication as well as data communication of the safety circuit. As a result, the number of lines / wires e.g. in the traveling cable can be reduced and an additional phone line or the like can be omitted. Further, the voice communication means comprises a time division multiplexing (TDM) bus being advantageous as compared with an asynchronous bus like IP or a synchronous bus like ISDN which may achieve the desired combination only with difficulty or at least at higher cost. Thus, the use of a TDM bus for the voice communication means is a very efficient way to reach a simplified construction with low cost.

In a preferred embodiment of the present invention, the voice communication means comprises a full-duplex voice interface, one preferred implementation is using a U interface of ISDN.

Preferably, the time division multiplexing bus is formed by a single twisted pair of a traveling cable of the elevator system.

Further, the elevator communication system shall comprise an uninterruptible power supply.

In a further embodiment of the present invention, the first voice communication device is at least one of a voice communication device provided inside the car and a voice communication device provided outside the car. The first voice communication device may include one or more components selected from an alarm button, a microphone, and a speaker.

Similarly, the second voice communication device is at least one of a voice communication device provided at a control room of the elevator system, a voice communication device provided at an internal rescue service, and a voice communication device provided at an external rescue service. The second voice communication device may include one or more components selected from an alarm button, a microphone, and a speaker.

To provide a more complete understanding of the present invention, and for further objects, features and advantages thereof, reference is now made to the following description taken in conjunction with the accompanying drawings, in which:
- Figure 1: is a schematic block diagram of an elevator communication system according to a preferred embodiment of the present invention;
- Figure 2: is a block diagram similar to that of Figure 1 schematically showing some voice flows; and
- Figure 3: is a block diagram similar to that of Figure 1 schematically showing some data flows.

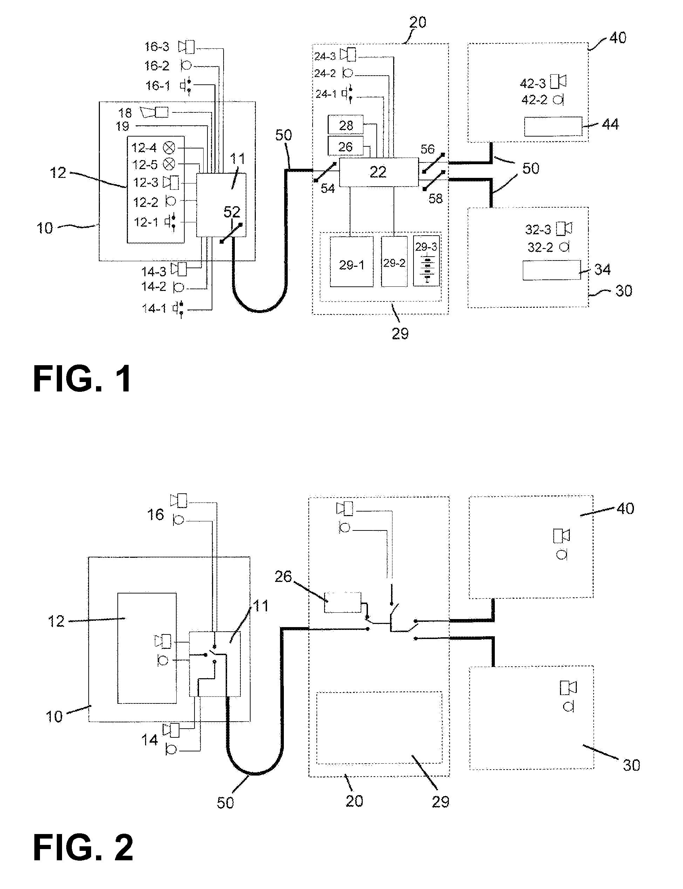

The main components of the elevator communication system shown in Figure 1 are the car 10 of an elevator system, the control room (e.g. machine room) 20, the internal rescue service 30, and the external rescue service 40. The elevator communication system shall provide voice communication between the car 10 and the control room 20 as well as between the car and the internal rescue service 30 and/or the external rescue service 40. Furthermore, a data communication shall be foreseen between the car 10, the control room 20, and the internal and external rescue services 30, 40.

The elevator communication system provides the integration of remote alarm, telemonitoring, elevator control, and the like into a single and generic concept. The main target is to group functions conventionally implemented in separate systems into a single elevator communication system and achieve cost reduction by closer integration, as well as define interfaces allowing the maximum flexibility and component choice.

On the side of the car 10, there are provided a voice communication device 12 inside the car 10, a voice communication device 14 at the bottom of the car 10, and a voice communication device 16 at the top of the car 10. The voice communication device 12 inside the car 10 includes an alarm button 12-1, a microphone 12-2, a speaker 12-3, an alarm memory lamp 12-4, and an alarm acknowledge lamp 12-5. Similarly, the voice communication devices 14, 16 at the bottom and the top of the car each include an alarm button 14-1, 16-1, a microphone 14-2, 16-2, and a speaker 14-3, 16-3. Further, there is a selector on the car's side for selecting between one of the voice communication devices 12, 14, 16 at the car.

Furthermore, the car is provided with an alarm horn 18 and an inductive loop 19.

In the control room 20, there is an alarm system controller 22. This alarm system controller 22 is connected to a filtering means 29-1, a monitoring means 29-2, and a power supply 29-3 of the elevator system controller 29. It is preferred that the elevator communication system has an uninterruptible power supply (e.g. a battery) and a monitoring means for monitoring the power supply. This monitoring means is part of the controller 29 if the power supply 29-3 is part of the controller 29. The filtering means carries out filtering operations based on car and door positions as well as trip or controller status.

Further, the control room 20 is provided with a second voice communication device 24. This voice communication device 24 may include an alarm button 24-1, a microphone 24-2, and a speaker 24-3. Furthermore, the alarm system controller 22 is connected to a voice identification means 26 and a data identification means 28 storing identification information for voice and data, respectively.

The internal rescue service 30 has a voice communication device 32 including a microphone 32-2 and a speaker 32-3, as well as a data interface 34. Similarly, the external rescue service 40 has a voice communication device 42 including a microphone 42-2 and a speaker 42-3, as well as a data interface 44.

In addition, the elevator communication system comprises a digital communication means in the form of a time division multiplexing bus 50 allowing for both voice and data communication. Especially, the voice and data communication between the car 10 and the control room 20 is carried out over a single twisted pair of the traveling cable of the elevator system.

The time division multiplexing bus 50 is connected to the car 10, the control room 20, the internal rescue service 30 and the external rescue service 40 via special interfaces 52, 54, 56, and 58. These interfaces will have two sub-interfaces, a voice interface and a data interface.

In an embodiment of the present invention, the data interface is a full-duplex serial asynchronous receiver and transmitter interface (i.e. RX, TX, RTS, CTS), min Baud rate TBD, and allowing PPP connections. The voice interface is preferably a full-duplex pulse code modulation serial framed synchronous interface (i.e. RX, TX, Clock, Frame, Strobe) at 8 kHz, optionally with A-law coding (logarithmic compression of pulse code modulation (PCM) signal according to US standard) or u-law coding (logarithmic compression of PCM signal according to European standard).

One preferred implementation of that time division multiplexing bus 50 is by using the U interface of ISDN. Full-duplex voice can be transmitted using two 64kb/s B channels, and one 16kb/s D channel can be used for data communication. This data communication interface does not correspond exactly to the above-proposed generic interface, but its characteristics can be matched by simple logic.

Of course, the use of other time division multiplexing busses which are compatible with the proposed interface structure and are suitable for use within a building is also possible.

The communication interface defined above allows a generic interface to numerous communication means (e.g. POTS, GSM, GPRS, etc.) that may be used at the external rescue service 40.

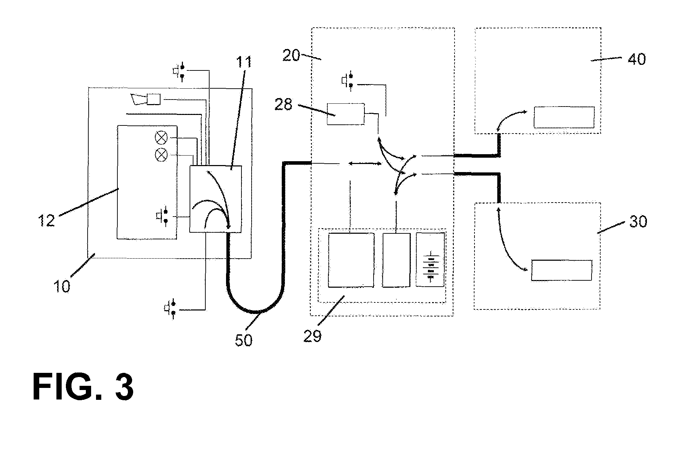

Figure 2 schematically shows possible voice flows of the elevator communication system, and Figure 3 schematically shows the main data flows of the elevator communication system described above.

For the voice flows, a switchboard is implemented in the alarm system controller 22 of the control room 20, and the selector 11 is provided in the car 10. The switchboard may be implemented in a generic manner, Figure 2 is just an example of the main voice flows needed.

In addition, the elevator communication system of the present invention should also fulfill the following requirements alone or in any combination:
- The elevator communication system shall have an alarm button in the car.
- The elevator communication system shall have a full-duplex voice communication between the car and an internal rescue service.
- The elevator communication system shall have a full-duplex voice communication between the car and an external rescue service.
- The elevator communication system shall have a full-duplex voice communication between the car and the control / machine room.
- The elevator communication system shall have a full-duplex voice communication between the car and the building.
- The elevator communication system shall have an alarm memory lamp in the car.
- The elevator communication system shall have an alarm acknowledge lamp in the car.
- The elevator communication system shall have an alarm horn in the car.
- The elevator communication system shall have an inductive loop in the car.
- The alarm system shall be able to filter the alarm based on door overbridging zone lamp status and end door contact status, as well as normal elevator trip status.
- The elevator communication system shall have a battery (uninterruptible power supply) allowing for alarm button function for at least one hour, independently of the battery's other uses.
- The elevator system shall provide electrical power supply status to an external rescue service if less than one hour of alarm system is available.
- The elevator communication system shall provide installation identification to an external rescue service.
- The elevator communication system shall provide the building location, the elevator number and the assistance needs to an internal and/or external rescue service.
- The elevator system shall allow for remote resetting of the alarm by the rescue service.
- The elevator communication system shall allow for remote monitoring, from an internal and/or external rescue service.
- The alarm function of the elevator communication system shall be effective even in case of failure of the main controller.
- The alarm function of the elevator communication system shall be powered from an uninterruptible power source.

## Claims

1. An elevator communication system, comprising:
a first voice communication device (12, 14, 16) provided at a car (10) of an elevator system;
a second voice communication device (24; 32, 42) provided at a control room (20) of the elevator system and/or a rescue service (30, 40); and
a voice communication means (50-58) for providing digital voice communication between the first and second voice communication devices (12, 14, 16; 24; 32, 42),
**characterized in that**
the voice communication means (50-58) comprises a time division multiplexing bus (50) allowing both the digital voice communication and a data communication of a safety circuit of the elevator system.

2. The elevator communication system according to claim 1, wherein
the voice communication means (50-58) comprises a full-duplex voice interface (52-58).

3. The elevator communication system according to claim 2, wherein
the voice communication means (50-58) comprises a U interface of ISDN (52-58).

4. The elevator communication system according to any one of claims 1 to 3, wherein
the time division multiplexing bus (50) is formed by a single twisted pair of a traveling cable of the elevator system.

5. The elevator communication system according to any one of preceding claims, further comprising an uninterruptible power supply.

6. The elevator communication system according to any one of preceding claims, wherein
the first voice communication device (12, 14, 16) is at least one of a voice communication device (12) provided inside the car (10) and a voice communication device (14, 16) provided outside the car (10).

7. The elevator communication system according to any one of preceding claims, wherein
the first voice communication device (12, 14, 16) includes one or more components selected from an alarm button (12-1, 14-1, 16-1), a microphone (12-2, 14-2, 16-2) and a speaker (12-3, 14-3, 16-3).

8. The elevator communication system according to any one of preceding claims, wherein
the second voice communication device (24; 32, 42) is at least one of a voice communication device (24) provided at a control room (20) of the elevator system, a voice communication device (32) provided at an internal rescue service (30), and a voice communication device (42) provided at an external rescue service (40).

9. The elevator communication system according to any one of preceding claims, wherein
the second voice communication device (24; 32, 42) includes one or more components selected from an alarm button (24-1), a microphone (24-2; 32-2, 42-2) and a speaker (24-3; 32-3, 42-3).
